# EUROPEAN PATENT APPLICATION

(11) **EP 3 148 115 A1**
(43) Date of publication of application: **29.03.2017**
(21) Application number: 14894867.2
(22) Date of filing: 18.06.2014
(51) Int. Cl.: H04L 12/24

(54) **COMMUNICATION METHOD, APPARATUS AND SYSTEM**

(71) Applicant: Huawei Technologies Co. Ltd., Shenzhen, Guangdong 518129 (CN)
(72) Inventor: PENG, Guikai, Shenzhen Guangdong 518129 (CN); LIN, Huafeng, Shenzhen Guangdong 518129 (CN)
(74) Representative: Pfenning, Meinig & Partner mbB
(86) International application number: PCT/CN2014/080152
(87) International publication number: WO 2015/192332

(57) **Abstract**

The present invention discloses a communication method, including: downloading, from a server according to a user instruction, a technical specification indicated by the user instruction, and sending the technical specification to an optical network unitONUby using an out-of-band management channel; configuring the technical specification; delivering a control message to the ONU by using the out-of-band management channel, to instruct the ONU to configure the technical specification; and communicating, based on a mode supported by the technical specification, with the ONU by using an in-band data channel. According to the solution, a physical layer or a MAC layer may be dynamically reconfigured, and different software may be used to define PON systems of different standards according to a user's requirements and an application scenario, with no need to replace hardware. This greatly increases flexibility during PON deployment and reduces costs of deployment and maintenance.

## Description

### TECHNICAL FIELD

The present invention relates to the communications field, and in particular, to a communication method, an apparatus, and a system.

### BACKGROUND

Currently, FTTx (Fiber To The X, fiber to the x, for example, FTTh, fiber to the home, and FTTB, fiber to the building), with its advantages such as high bandwidth and a long distance, has been favored in the access field. In particular, an optical access technology PON (Passive Optical Network, passive optical network) characterized by point-to-multipoint transmission receives attention in the industry. In comparison with point-to-point optical access, at a PON central office, a feeder fiber can be divided into dozens of or even more optical fibers to connect users. This greatly reduces network construction costs and is a most cost-effective technical means of FTTx.

At present, a PON technology mainly includes EPON (Ethernet Passive Optical Network, Ethernet passive optical network), GPON (Gigabit-capableGigabit Passive Optical Network, gigabit-capable passive optical network), and the like. EPON can support a symmetric rate of 1.25 Gbps and the rate can be further increased to 10 Gbps in the future. EPON products are commercially used to a greater extent. EPON is a perfect combination of the Ethernet technology and the PON technology, and therefore becomes a broadband access technology that suits an Internet Protocol (Internet Protocol, IP) service very well. Next-generation EPON includes two types: One is asymmetric 10G-EPON with a downstream rate of 10 Gb/s and an upstream rate of 1.25 Gb/s, and the other is symmetric 10G-EPON with both the upstream rate and the downstream rate being 10 Gb/s. At present, the 10G-EPON standard has been formulated and has begun to be used in first office application.

When the Ethernet in the First Mile Alliance EFMA put forward the concept of EPON, the Full Service Access Network (Full Service Access Networks, FSAN) put forward the concept of GPON. GPON has been standardized by the FSAN and the International Telecommunication Union ITU. Technical characteristics of GPON are: a Generic Framing Procedure GFP defined by the ITU-T is used at Layer 2 to perform encapsulation and mapping on various services such as the Ethernet Ethernet and TDM (Time Division Multiplexing, time division multiplexing), a downstream rate of 2.5 Gb/s and an upstream rate of 1.25 Gb/s can be provided, and a powerful OAM (Operation Administration Management, operation, administration and management) function can be provided. In terms of a high rate and multiservice support, GPON has obvious advantages, but its costs are slightly higher than those of EPON.

A next-generation GPON technology also includes two types: One is NG-PON1 (Next Generation Passive Optical Network, next generation passive optical network), that is, 10G-GPON with a downstream rate of 10 Gb/s and an upstream rate of 2.5 Gb/s, and the other is NG-PON2, and a TWDM-PON (Time Wavelength Division Multiplexing Passive Optical Network, time wavelength division multiplexing passive optical network) solution used by NG-PON2 targets at a higher rate, a longer distance, and support for more users.

However, the foregoing conventional PON systems all have an inherent disadvantage. Their PHY (Physical Layer, physical layer) modulation formats and MAC (Media Access Control, Media Access Control) protocols are unchanged. For example, for EPON, a PHY layer modulation scheme can only be OOK (On-Off Keying , also referred to as binary amplitude shift keying 2ASK), and a MAC layer protocol is invariably an Ethernet frame-based protocol. For GPON, a PHY layer modulation format can only be OOK, and a MAC layer protocol is invariably a GEM (GPON Encapsulation Method, gigabit-capable passive optical network encapsulation method) frame-based protocol. Different chips and systems are used for different applications, resulting in poor flexibility and difficult maintenance and management.

### SUMMARY

Embodiments of the present invention provide a passive optical network PON system, to resolve a problem in the prior art that both a PHY modulation format and a MAC protocol of a PON system are unchanged with poor flexibility and are difficult to maintain and manage.

To achieve the foregoing objective, the following technical solutions are used in the embodiments of the present invention:

According to a first aspect, a communication method is provided, including: downloading, from a server according to a user instruction, a technical specification indicated by the user instruction, and sending the technical specification to an optical network unit ONU by using an out-of-band management channel; performing configuration according to the technical specification; delivering a control message to the ONU by using the out-of-band management channel, to instruct the ONU to configure the technical specification; and communicating, based on a mode supported by the technical specification, with the ONU by using an in-band data channel.

With reference to the first aspect, in a first possible implementation manner of the first aspect, the method further includes: sending a modulated signal to the ONU by using the in-band data channel; and receiving, by using the out-of-band management channel, a signal-to-noise ratio SNR reported by the ONU.

With reference to the first aspect or the first possible implementation manner of the first aspect, in a second possible implementation manner of the first aspect, the method further includes: querying, by using the out-of-band management channel, whether the ONU supports the technical specification, and when receiving a prompt that the ONU does not support the technical specification, sending the technical specification to the ONU by using the out-of-band management channel.

With reference to the first aspect or the first possible implementation manner of the first aspect, in a third possible implementation manner of the first aspect, the method further includes: querying, by using the out-of-band management channel, whether the ONU supports the technical specification, and receiving a message, indicating support, fed back by the ONU.

With reference to the first aspect or any possible implementation manner, in a fourth possible implementation manner of the first aspect, the method further includes: receiving a registration request of the ONU by using the out-of-band management channel; and sending, to the ONU by using the out-of-band management channel, an ONU identifier allocated to the ONU.

With reference to the first aspect or any possible implementation manner, in a fifth possible implementation manner of the first aspect, a bandwidth of the out-of-band management channel is less than a bandwidth of the in-band data channel.

With reference to the first aspect or any possible implementation manner, in a sixth possible implementation manner of the first aspect, ranges of spectra of the out-of-band management channel and the in-band data channel may be randomly set according to an operator's requirement.

According to a second aspect, a communication method is provided, including: receiving, by an optical network unit ONU by using an out-of-band management channel, a control message sent by an optical line terminal OLT, where the control message is used to instruct the ONU to configure a technical specification the same as that of the OLT;
performing, by the ONU, configuration according to the technical specification; and
communicating, by the ONU and based on the configured technical specification, with the OLT by using an in-band data channel.

With reference to the second aspect, in a first possible implementation manner of the second aspect, the method further includes: receiving a query message by using the out-of-band management channel, where the query message is used to query whether the ONU supports the technical specification the same as that of the OLT;
feeding back, to the OLT when the ONU does not support the technical specification, a prompt indicating no support; and
receiving and saving the technical specification sent by the OLT.

With reference to the second aspect or the first possible implementation manner of the second aspect, in a second possible implementation manner of the second aspect, the method further includes: receiving a modulated signal by using the in-band data channel, evaluating a signal-to-noise ratio on an entire downstream link according to a constellation diagram restored from the received signal, and feeding back the signal-to-noise ratio to the OLT by using the out-of-band management channel.

With reference to the second aspect or either possible implementation manner of the second aspect, in a third possible implementation manner of the second aspect, the method further includes: sending a registration request of the ONU by using the out-of-band management channel; and receiving, by using the out-of-band management channel, an ONU identifier allocated by the OLT to the ONU.

With reference to the second aspect or any possible implementation manner of the second aspect, in a fourth possible implementation manner of the second aspect, a bandwidth of the out-of-band management channel is less than a bandwidth of the in-band data channel.

With reference to the second aspect or any possible implementation manner of the second aspect, in a fifth possible implementation manner of the second aspect, ranges of spectra of the out-of-band management channel and the in-band data channel may be randomly set according to an operator's requirement.

According to a third aspect, an apparatus for reconfiguration is provided, including: a control unit, configured to: download, from a server according to a user instruction, a technical specification indicated by the user instruction, and load the technical specification to an optical network unit ONU by using an out-of-band management channel; configure the technical specification to a data unit; and deliver a control message to the ONU by using the out-of-band management channel, to instruct the ONU to configure the technical specification; and the data unit, configured to: configure the technical specification and communicate, based on a mode supported by the technical specification, with the ONU by using an in-band data channel.

With reference to the third aspect, in a first possible implementation manner of the third aspect, the apparatus further includes a storage unit, configured to store the technical specification.

With reference to the third aspect or the first possible implementation manner of the third aspect, in a second possible implementation manner of the third aspect, the control unit is further configured to: send a modulated signal to the ONU by using the in-band data channel and receive, by using the out-of-band management channel, a signal-to-noise ratio SNR reported by the ONU.

With reference to the third aspect or either possible implementation manner of the third aspect, in a third possible implementation manner of the third aspect, the control unit is further configured to configure the technical specification and query, by using the out-of-band management channel, whether the ONU supports the technical specification.

With reference to the third aspect or any possible implementation manner of the third aspect, in a fourth possible implementation manner of the third aspect, a bandwidth of the out-of-band management channel is less than a bandwidth of the in-band data channel.

With reference to the third aspect or any possible implementation manner of the third aspect, in a fifth possible implementation manner of the third aspect, ranges of spectra of the out-of-band management channel and the in-band data channel may be randomly set according to an operator's requirement.

With reference to the third aspect or any possible implementation manner of the third aspect, in a sixth possible implementation manner of the third aspect, the control unit is further configured to complete registration of the ONU by using the out-of-band management channel.

According to a fourth aspect, an apparatus for reconfiguration is provided, including: a control unit, configured to: receive, by using an out-of-band management channel, a control message sent by an optical line terminal OLT and configure, to a data unit according to an instruction of the control message, a technical specification the same as that of the OLT; and
the data unit, configured to communicate, based on a mode supported by the technical specification, with the OLT by using an in-band data channel.

With reference to the fourth aspect, in a first possible implementation manner of the fourth aspect, the apparatus further includes a storage unit, configured to store the technical specification.

With reference to the fourth aspect or the first possible implementation manner of the fourth aspect, in a second possible implementation manner of the fourth aspect, the control unit is further configured to receive a query message by using the out-of-band management channel, to query whether the optical network unit ONU supports the technical specification the same as that of the OLT; and if the ONU supports the technical specification, send an acknowledge message to the OLT.

With reference to the fourth aspect or either possible implementation manner of the fourth aspect, in a third possible implementation manner of the fourth aspect, the control unit is further configured to receive a modulated signal by using the in-band data channel, compare an ideal constellation diagram for a modulation scheme and a constellation diagram restored from the received signal, evaluate a signal-to-noise ratio on an entire downstream link, and feed back the signal-to-noise ratio to the OLT by using the out-of-band management channel.

With reference to the fourth aspect or any possible implementation manner of the fourth aspect, in a fourth possible implementation manner of the fourth aspect, the control unit is further configured to: receive a query message by using the out-of-band management channel, to query whether an optical network unit ONU supports the technical specification the same as that of the OLT; if the ONU does not support the technical specification, feed back, to the OLT, a prompt indicating no support; receive the technical specification sent by the OLT; and store the technical specification to the storage unit or configure the technical specification to the data unit.

With reference to the fourth aspect or any possible implementation manner of the fourth aspect, in a fifth possible implementation manner of the fourth aspect, a bandwidth of the out-of-band management channel is less than a bandwidth of the in-band data channel.

With reference to the fourth aspect or any possible implementation manner of the fourth aspect, in a sixth possible implementation manner of the fourth aspect, ranges of spectra of the out-of-band management channel and the in-band data channel may be randomly set according to an operator's requirement.

According to a fifth aspect, a PON system is provided, including: an optical line terminal OLT, configured to: download, from a server according to a user instruction, a technical specification indicated by the user instruction, and load the technical specification to an optical network unit ONU by using an out-of-band management channel; deliver a control message to the ONU by using the out-of-band management channel, to instruct the ONU to configure the technical specification; and communicate, based on a mode supported by the technical specification, with the ONU by using an in-band data channel, where a downstream channel is divided into the out-of-band management channel and the in-band data channel according to spectra; and
the ONU, configured to: receive, by using the out-of-band management channel, the control message delivered by the OLT; configure the technical specification; and communicate, based on the mode supported by the technical specification, with the OLT by using the in-band data channel.

With reference to the fifth aspect, in a first possible implementation manner of the fifth aspect, the OLT is further configured to: send a modulated signal to the ONU by using the in-band data channel and receive, by using the out-of-band management channel, a signal-to-noise ratio reported by the ONU.

With reference to the fifth aspect or the first possible implementation manner of the fifth aspect, in a second possible implementation manner of the fifth aspect, the OLT is further configured to: query, by using the out-of-band management channel, whether the ONU supports the technical specification, and if the ONU does not support the technical specification, load the technical specification to the ONU by using the out-of-band management channel.

With reference to the fifth aspect or either possible implementation manner of the fifth aspect, in a third possible implementation manner of the fifth aspect, the OLT is further configured to receive a registration request of the ONU by using the out-of-band management channel.

With reference to the fifth aspect or any possible implementation manner of the fifth aspect, in a fourth possible implementation manner of the fifth aspect, a bandwidth of the out-of-band management channel is less than a bandwidth of the in-band data channel.

With reference to the fifth aspect or any possible implementation manner of the fifth aspect, in a fifth possible implementation manner of the fifth aspect, ranges of spectra of the out-of-band management channel and the in-band data channel may be randomly set according to an operator's requirement.

According to a sixth aspect, an optical line terminal OLT is provided, including a processor, where the processor is configured to execute the method according to the first aspect or any possible implementation manner of the first aspect.

According to a seventh aspect, an optical network unit ONU is provided, including a processor, where the processor is configured to execute the method according to the second aspect or any possible implementation manner of the second aspect.

A technical specification indicated by a user instruction is downloaded according to the user instruction, and the technical specification is configured and run. Therefore, a physical layer and a MAC layer can be dynamically reconfigured, and PON systems of different standards can be defined according to a user's requirements and an application scenario, with no need to replace hardware. This greatly increases flexibility during PON deployment and reduces costs of deployment and maintenance.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show only some embodiments of the present invention, and a person of ordinary skill in the art may still derive other drawings from these accompanying drawings without creative efforts.
FIG. 1 is a diagram of a system architecture of a passive optical network PON;
FIG. 2a is a schematic structural diagram of an optical line terminal OLT according to an embodiment of the present invention;
FIG. 2b is a schematic structural diagram of an optical line terminal OLT according to an embodiment of the present invention;
FIG. 2c is a schematic structural diagram of another optical line terminal OLT according to an embodiment of the present invention;
FIG. 3a is a schematic structural diagram of an optical network unit ONU according to an embodiment of the present invention;
FIG. 3b is a schematic structural diagram of an optical network unit ONU according to an embodiment of the present invention;
FIG. 3c is a schematic structural diagram of another optical network unit ONU according to an embodiment of the present invention;
FIG. 4 is a schematic diagram of spectral division for an out-of-band management channel and an in-band data channel according to an embodiment of the present invention;
FIG. 5 is an architectural diagram of interaction between a passive optical network system and an external server by using a network according to an embodiment of the present invention;
FIG. 6 is a structural diagram of a PON system according to an embodiment of the present invention;
FIG. 7 is an interaction diagram of a process of implementing reconfiguration on an OLT and an ONU according to an embodiment of the present invention;
FIG. 8 is a schematic structural diagram of an OLT according to an embodiment of the present invention; and
FIG. 9 is a schematic structural diagram of an ONU according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are only some but not all of the embodiments of the present invention. All other embodiments obtained by a person of ordinary skill in the art based on the embodiments of the present invention without creative efforts shall fall within the protection scope of the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A passive optical network (Passive Optical Network, PON) includes an optical line terminal (Optical Line Terminal, OLT) at a central office, an optical network unit (Optical Network Unit, ONU) or an optical network terminal (Optical Network Terminal, ONT) on a user side, and an optical distribution network (Optical Distribute Network, ODN). At present, representative PON technologies include GPON (Gigabit-Capable Passive Optical Network, gigabit-capable passive optical network), EPON (Ethernet Passive Optical Network, Ethernet passive optical network), 10G-GPON (also referred to as XG-PON), and 10G-EPON.

The OLT provides a network-side interface for the PON system and is connected to one or more ODNs. The ONU provides a user-side interface for the PON system and is connected to the ODN. If the ONU directly provides a user port function, for example, an Ethernet user port for Internet access by a personal computer (Personal Computer, PC), the ONU is referred to as an ONT. Unless otherwise specified, the ONU mentioned below refers to both an ONU and an ONT. The ODN is a network including an optical fiber and a passive optical splitting device and is configured to connect an OLT device and an ONU device, to distribute or multiplex data signals between the OLT and the ONU. In the PON system, a direction from the OLT to the ONU is referred to as downstream. Conversely, a direction from the ONU to the OLT is referred to as upstream.

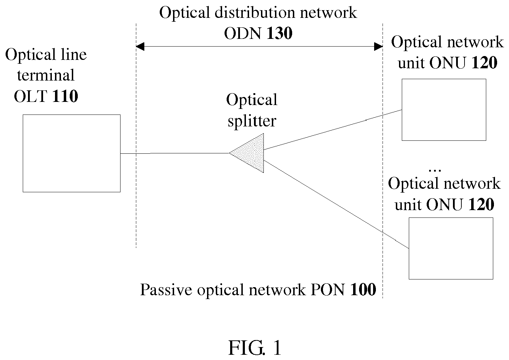

FIG. 1 shows an embodiment of a PON 100. The PON 100 may include one OLT 110, multiple ONUs 120, and one ODN 130. The ODN 130 may be coupled to the OLT 110 and each ONU 120. The PON 100 may be a communications network in which no active components are required to allocate data between the OLT 110 and each ONU 120. Instead, in the PON 100, a passive optical component may be used in the ODN 130, so as to allocate data between the OLT 110 and each ONU 120. The PON 100 may be an NGA (Next Generation Access, next generation access) system, for example, XG-PON (X Gigabit PON, also referred to as 10 gigabit passive optical network) that can provide a downstream bandwidth of approximately 10 Gbps and an upstream bandwidth of at least approximately 2.5 Gbps, or may be 10G-EPON (10 Gigabit Ethernet PON, 10 Gigabit Ethernet passive optical network). Other suitable examples of the PON 100 include an asynchronous transfer mode PON (Asynchronous Transfer Mode PON, APON) and a broadband PON (Broadband PON, BPON) that are defined in the International Telecommunication Union-Telecommunication Standardization Sector (International Telecommunication Union Telecommunication Standardization Sector, ITU-T) G.983 standard, GPON defined in the ITU-T G.984 standard, EPON defined in the Institute of Electrical and Electronics Engineers (Institute of Electrical and Electronics Engineers, IEEE) 802.3ah standard, 10G-EPON described in the IEEE 802.3av standard, and the wavelength division multiplexing PON (Wavelength Division Multiplexing-PON, WDM-PON). In addition, the PON 100 may further have a multi-wavelength capability. Multiple downstream and/or upstream wavelengths (or wavelength channels) may be used to carry data, for example, to carry data for different ONUs 120 or customers. Therefore, a PON protocol may be used to support any one of the foregoing multi-wavelength technologies/systems.

The OLT 110 may be any device configured to communicate with each ONU 120 and another network (not shown in the figure). The OLT 110 may act as an intermediary between the another network and each ONU 120. For example, the OLT 110 may forward, to each ONU 120, data received from a network and forward, to the another network, data received from each ONU 120. Although a specific configuration of the OLT 110 may vary with a type of the PON 100, in an embodiment, the OLT 110 may include a transmitter and a receiver. When the another network uses a network protocol, for example, an Ethernet or synchronous optical network (Ethernet or Synchronous Optical Network, SONET)/synchronous digital hierarchy (Synchronous Digital Hierarchy, SDH), different from the PON protocol used in the PON 100, the OLT 110 may include a converter that converts the network protocol into the PON protocol. The converter of the OLT 110 may further convert the PON protocol into the network protocol. The OLT 110 may be usually placed at a central location, for example, a central office. Alternatively, the OLT 110 may be placed at another location.

Each ONU 120 may be any device configured to communicate with the OLT 110 and a customer or a user (not shown in the figure). Each ONU 120 may act as an intermediary between the OLT 110 and the customer. For example, each ONU 120 may forward, to the customer, data received from the OLT 110 and forward, to the OLT 110, data received from the customer. Although a specific configuration of each ONU 120 may vary with a type of the PON 100, in an embodiment, each ONU 120 may include an optical transmitter configured to send an optical signal to the OLT 110 and an optical receiver configured to receive an optical signal from the OLT 110. Transmitters and receivers of different ONUs 120 may use different wavelengths to send and receive optical signals carrying data, and a transmitter and a receiver of one ONU 120 may use one wavelength or different wavelengths. In addition, each ONU 120 may include: a converter that converts an optical signal, for example, a signal in the Ethernet protocol, into an electrical signal for the customer, and a second transmitter and/or a second receiver that may send and/or receive an electrical signal to and/or from a customer device. In some embodiments, each ONU 120 and each optical network terminal (Optical Network Terminal, ONT) are similar, and therefore these terms can be used interchangeably in this specification. Each ONU may be usually placed at an allocated location, for example, a customer premise. Alternatively, each ONU may be placed at another location.

The ODN 130 may be a data distribution system and may include an optical fiber cable, a coupler, a splitter, a distributor, and/or another device. The optical fiber cable, the coupler, the splitter, the distributor, and/or the another device may be passive optical components. The passive optical components may not need any electric energy to allocate a data signal between the OLT 110 and each ONU 120. Alternatively, the ODN 130 may include one or more processing devices, for example, an optical amplifier. Generally, the ODN 130 may connect to the OLT 110 and the ONUs 120 in a one-to-many manner shown in FIG. 1. Alternatively, the ODN 130 may be configured in another point-to-multipoint manner.

### Embodiment 1

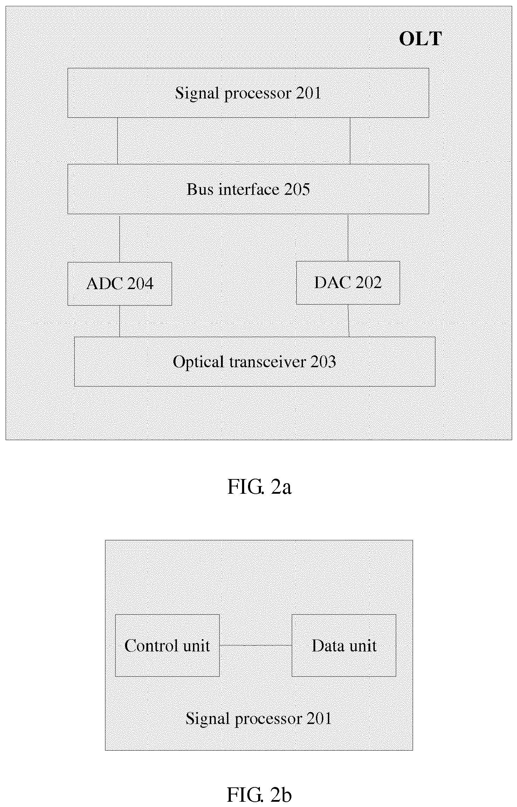

This embodiment of the present invention provides an optical line terminal OLT, As shown in FIG. 2a, the OLT specifically includes:
a signal processor 201, where the signal processor may be a high-performance DSP (Digital Signal Processor, digital signal processor), a high-performance FPGA (Field-Programmable Gate Array, field programmable gate array), a high-performance CPU with multiple cores, such as dual cores, four cores, and eight cores, or may use an application-specific integrated circuit (Application Specific Integrated Circuit, ASIC), a system on chip (System on Chip, SoC), a central processing unit (Central Processing Unit, CPU), a network processor (Network Processor, NP), a microcontroller (Micro Controller Unit, MCU), a programmable controller (Programmable Logic Device, PLD), or another integrated chip;
a digital-to-analog converter (Digital-to- Analog Convert, DAC) 202, where one end of the digital-to-analog converter is coupled to the signal processor 201 by using a bus interface 205, and the other end is coupled to an optical transceiver 203; the digital-to-analog converter is configured to convert data transmitted by the signal processor 201 into an analog signal and send the analog signal to the optical transceiver 203;
an analog-to-digital converter (Analog Digital Convert, ADC) 204, where one end of the analog-to-digital converter is coupled to the signal processor 201 by using the bus interface 205, and the other end is coupled to the optical transceiver 203; the analog-to-digital converter is configured to convert an analog signal sent by the optical transceiver 203 into a digital signal and send the digital signal to the signal processor 201;
the optical transceiver 203, also referred to as an optical module, including an optical transmitter and an optical receiver, where the optical transmitter is configured to perform electrical-to-optical conversion on the analog signal received from the digital-to-analog converter 202 and send an obtained optical signal to an optical distribution network ODN; and the optical receiver is configured to perform optical-to-electrical conversion on an optical signal received from the optical distribution network ODN to obtain an analog signal, and send the analog signal to the analog-to-digital converter 204 for processing; and
the bus interface 205, which is a channel used for information transmission among the foregoing components.

In downstream, a signal in the signal processor 201 enters the DAC by using the bus interface 205 after undergoing modulation processing, so as to obtain an electrical analog signal. The optical transceiver 203 performs electrical-to-optical conversion on the electrical analog signal. An optical signal is sent to an ONU by using the ODN.

In upstream, the optical transceiver 203 performs optical-to-electrical conversion on an upstream optical signal of the ONU to obtain an electrical analog signal. The electrical analog signal passes through the ADC and enters the signal processor 201 for demodulation and other processing.

As shown in FIG. 2b, the signal processor 201 includes a control unit and a data unit.

The control unit is configured to perform functions such as centrally managing and registering each ONU by using an out-of-band management channel, creating and deregistering various PHY and MAC instances in the OLT, and reconfiguring a modulation format and a MAC protocol of the ONU. The control unit specifically includes a configuration module, a PON component management module, and an ONU registration module.

Specifically, the control unit is configured to: download, from a server according to a user instruction, a technical specification indicated by the user instruction, and load the technical specification to an optical network unit ONU by using the out-of-band management channel; configure the technical specification to the data unit; and deliver a control message to the ONU by using the out-of-band management channel, to instruct the ONU to configure the technical specification.

The data unit communicates with the control unit by using a programming interface, configures the technical specification, and runs the technical specification. The data unit includes various processing modules configured to execute specific services, such as a MAC processing module and a PHY processing module.

The data unit is further configured to communicate, based on a mode supported by the technical specification, with the ONU by using an in-band data channel.

The signal processor 201 further includes a storage unit, configured to store the technical specification.

Optionally, the control unit is further configured to: send a modulated signal to the ONU by using the in-band data channel and receive, by using the out-of-band management channel, a signal-to-noise ratio SNR reported by the ONU.

Optionally, the control unit is further configured to query, by using the out-of-band management channel, whether the ONU supports the technical specification.

A bandwidth of the out-of-band management channel is less than a bandwidth of the in-band data channel.

Spectra of the out-of-band management channel and the in-band data channel are independent, and ranges of the spectra may be randomly set according to an operator's requirement.

Optionally, the control unit is further configured to complete registration of the ONU by using the out-of-band management channel.

The OLT is further described below according to a specific application scenario and Embodiment 3.

### Embodiment 2

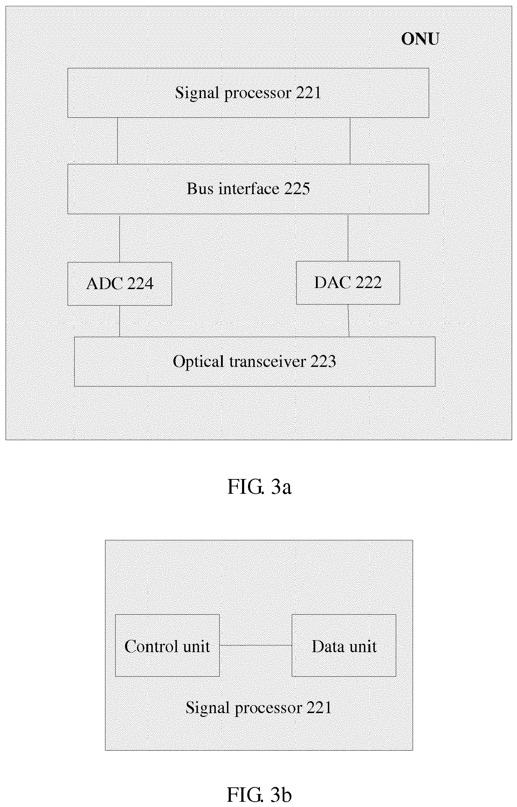

This embodiment of the present invention further provides an optical network unit ONU 22. As shown in FIG 3a, the ONU 22 specifically includes:
a signal processor 221, where the signal processor may be a high-performance DSP (Digital Signal Processor, signal processor), a high-performance FPGA (Filed-Programmable Gate Array, field programmable gate array), a high-performance CPU with multiple cores, such as dual cores, four cores, and eight cores, or may use an application-specific integrated circuit (Application Specific Integrated Circuit, ASIC), a system on chip (System on Chip, SoC), a central processing unit (Central Processor Unit, CPU), a network processor (Network Processor, NP), a microcontroller (Micro Controller Unit, MCU), a programmable controller (Programmable Logic Device, PLD), or another integrated chip;
a digital-to-analog converter DAC 222, where one end of the digital-to-analog converter is coupled to the signal processor 221 by using a bus interface 225, and the other end is coupled to an optical transceiver 223; the digital-to-analog converter is configured to convert data transmitted by the signal processor 221 into an analog signal and send the analog signal to the optical transceiver 223;
an analog-to-digital converter ADC 224, where one end of the analog-to-digital converter is coupled to the signal processor 221 by using the bus interface 225, and the other end is coupled to the optical transceiver 223; the analog-to-digital converter is configured to convert an analog signal sent by the optical transceiver 223 into a digital signal and send the digital signal to the signal processor 221;
the optical transceiver 223, also referred to as an optical module, including an optical transmitter and an optical receiver, where the optical receiver is configured to perform optical-to-electrical conversion on an optical signal received from an optical distribution network ODN to obtain an analog signal, and send the analog signal to the analog-to-digital converter ADC 224 for processing; and the optical transmitter is configured to perform electrical-to-optical conversion on the analog signal received from the digital-to-analog converter DAC 222 and send an obtained optical signal to an ODN that further transmits the optical signal to an OLT 20 for processing; and
the bus interface 225, which is a channel used for information transmission among the foregoing components.

In upstream, a signal in the signal processor 221 enters the digital-to-analog converter 222 by using the bus interface 225 after undergoing modulation processing, so as to obtain an electrical analog signal. The optical transceiver 223 performs electrical-to-optical conversion. An optical signal is sent to the OLT 20 by using the ODN 21.

In downstream, the optical transceiver 223 performs optical-to-electrical conversion on a downstream optical signal of the OLT 20 to obtain an electrical analog signal. The electrical analog signal passes through the ADC 224 and enters the signal processor 221 for demodulation and other processing.

As shown in FIG. 3b, the signal processor 221 includes a control unit and a data unit.

The control unit is configured to implement a management function on the ONU, and specifically includes a configuration module, a PON component management module, and an ONU registration module.

The data unit communicates with the control unit by using a programming interface, and specifically includes modules configured to process various specific services, such as a MAC processing module and a PHY processing module.

Specifically, the control unit is configured to: receive, by using an out-of-band management channel, a control message sent by the optical line terminal OLT, and configure, to the data unit according to an instruction of the control message, a technical specification the same as that of the OLT.

The data unit is configured to communicate with the control unit by using the programming interface, configure the technical specification, run the technical specification, and communicate, based on a mode supported by the technical specification, with the OLT by using an in-band data channel.

Optionally, the signal processor 221 further includes a storage unit, configured to store the technical specification.

Optionally, the control unit is further configured to receive a query message by using the out-of-band management channel, to query whether the optical network unit ONU supports the technical specification the same as that of the OLT; and if the ONU supports the technical specification, send an acknowledge message to the OLT.

Optionally, the control unit is further configured to: receive, by using the in-band data channel, a modulated signal sent by the OLT, compare an ideal constellation diagram for a modulation scheme and a constellation diagram restored from the received signal, evaluate a signal-to-noise ratio on an entire downstream link, and feed back the signal-to-noise ratio to the OLT by using the out-of-band management channel.

Optionally, the control unit is further configured to: receive a query message by using the out-of-band management channel, to query whether the optical network unit ONU supports the technical specification the same as that of the OLT; if the ONU does not support the technical specification, feed back, to the OLT, a prompt indicating no support; receive the technical specification sent by the OLT; and store the technical specification to the storage unit or configure the technical specification to the data unit.

A bandwidth of the out-of-band management channel is less than a bandwidth of the in-band data channel. Ranges of spectra of the out-of-band management channel and the in-band data channel may be randomly set according to an operator's requirement.

The ONU is further described below according to a specific application scenario and Embodiment 3.

### Embodiment 3

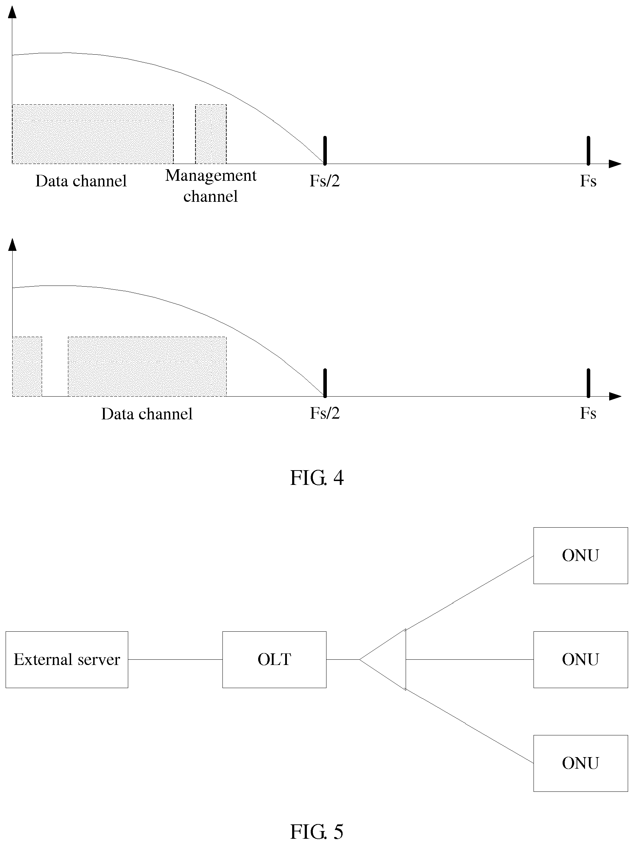

In this embodiment of the present invention, an entire downstream channel is divided into a management channel and a data channel according to spectra. As shown in FIG 4, spectra of the management channel and the data channel are planned as follows:

Exemplarily, Fs is a sampling rate of D/A and A/D. DC to Fs/2 is a first Nyquist domain. Management spectra (Management spectra) and data spectra (Data Spectra) are in the first Nyquist domain and the spectra are independent of each other. Certainly, the management spectra and the data spectra may alternatively be not only in the first Nyquist domain, but in an entire Fs domain. Generally, a bandwidth of the management channel is less than a bandwidth of the data channel. Ranges of the spectra and proportions of the management channel and the data channel may be randomly set or planned by an operator. For example, in an implementation manner, a total bandwidth of the downstream channel is 10 GHz (gigahertz), with the bandwidth of the management channel being 100 MHz (megahertz) and the bandwidth of the data channel being 9 GHz. A control unit of an OLT and a control unit of an ONU communicate with each other by using an out-of-band management channel. The ONU is registered by using the out-of-band management channel. This forms a lightweight small system out of a band. A function of the small system is to allow the OLT to manage the ONU. Based on the small system, PHY layer or MAC layer function reconfiguration may be performed on an in-band data channel.

It should be noted that signal processors of both the OLT and the ONU are programmable hardware and are general-purpose processors. Therefore, the hardware does not need to be replaced during the function reconfiguration. The PHY layer and MAC layer function reconfiguration needs to be performed on an original PON system only according to a user's requirements and in a software loading or upgrading manner.

The PHY layer reconfiguration may be changing some modulation formats at a PHY layer. The modulation format may be QAM (Quadrature Amplitude Modulation, Quadrature Amplitude Modulation), QPSK (Quadrature Phase Shift Keying, quadrature phase-shift keying), OFDM (Orthogonal Frequency Division Multiplexing, orthogonal frequency division multiplexing), ASK (Amplitude Shift Keying, amplitude-shift keying), FSK (Frequency-shift keying, frequency-shift keying), or the like. Other known modulation technologies in the prior art may also be used, which are not listed one by one herein. Exemplarily, the modulation format at the PHY layer is changed from an OOK modulation format to a PAM-4 (Pulse Amplitude Modulation 4, 4-level pulse amplitude modulation) modulation format.

The MAC layer reconfiguration may be changing a working protocol at a MAC layer. A MAC protocol includes the GPON MAC protocol, the EPON MAC protocol, the 10G-GPON MAC protocol, the 10G-EPON MAC protocol, the wireless MAC protocol, a MAC protocol such as 40G-PON, 100G-PON, and the like that provides a higher transmission rate, or any one of MAC protocols such as the Ethernet protocol, CPRI (Common Public Radio Interface, common public radio interface), or OBSAI (Open Base Station Architecture Initiative, Open Base Station Architecture Initiative). For example, the MAC protocol is changed from the GPON MAC protocol to the 10G-GPON MAC protocol according to a user instruction. In addition, users may further self-define the MAC protocol according to their needs.

FIG. 5 is an architectural diagram of interaction between a passive optical network system and a remote server by using a network. As shown in FIG. 5, one or more wired (for example, PON) or wireless (for example, CPRI) technical specifications are stored in a database of the server. The technical specification refers to executable code and/or parameters of a corresponding standard. The OLT and the ONU download, from the server, required technical specifications to their own memories by using the network. The ONU may communicate with the OLT by using the out-of-band management channel (when PHY and MAC functions of the PON system are not completely configured), or communicate with the OLT by using the in-band data channel (when PHY and MAC functions of the PON system are completely configured).

In the present invention, the technical specification may be used as a collection of software program code complying with a standard. The OLT or the ONU may perform communication according to a modulation format or a MAC protocol specified in the technical specification. For example, to adjust the OOK modulation format to a PAM modulation format, the OLT needs to download, from the remote server to a local memory, a technical specification supporting the PAM modulation format. After configuring the technical specification successfully, configuring the technical specification to the ONU by using the out-of-band management channel and running the technical specification, the OLT can communicate with the ONU based on the PAM modulation format.

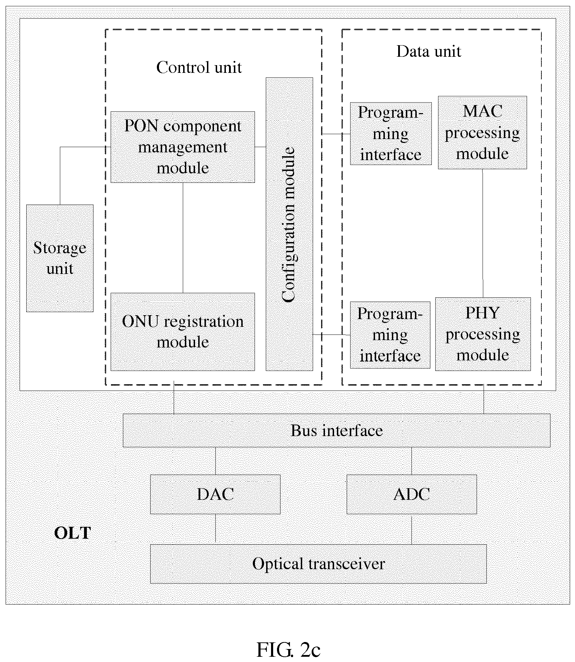

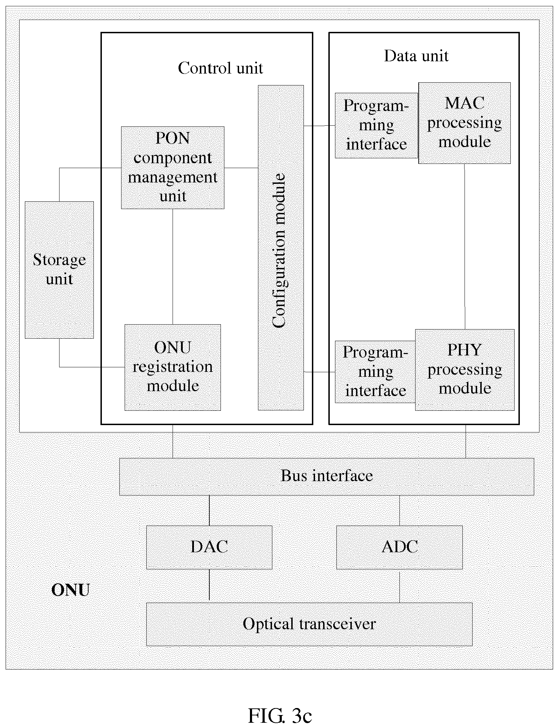

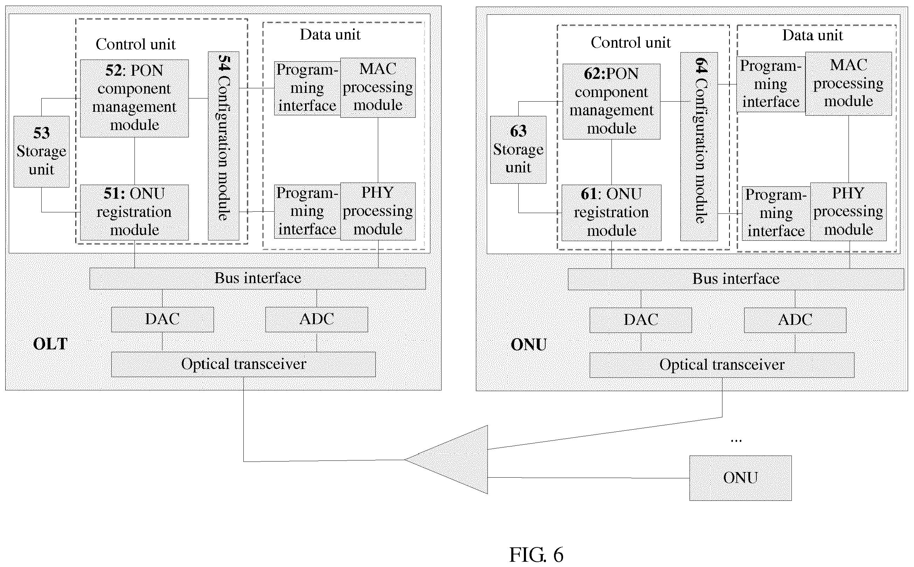

FIG. 2c and FIG. 3c are schematic structural diagrams of an OLT and an ONU in a passive optical network system, respectively. Structures of the OLT and the ONU are described in Embodiment 1 and Embodiment 2, and details are not further described herein. In FIG. 2c and FIG. 3c, both the signal processor of the OLT and the signal processor of the ONU are logically divided. Each signal processor includes a storage unit, a control unit, and a data unit. As shown in FIG. 6, the control unit of the OLT communicates with the control unit of the ONU by using the out-of-band management channel. The data unit of the OLT communicates with the data unit of the ONU by using the in-band data channel. The out-of-band management channel and the in-band data channel are independent in terms of spectra (not shown in the figure).

The data units of both the OLT and the ONU include some modules related to specific service processing, such as a PHY processing module and a MAC processing module. Functions of these modules may be reconfigured or redefined by using the control units. Both of the two modules have corresponding programming interfaces. These interfaces may be publicly released interfaces, for example, OpenFlow, or may be specifically developed interfaces. Configuration modules of the control units are responsible for exchanging information with these programming interfaces.

The signal processors of the OLT and the ONU each include one or more storage units, configured to store various PON technical specifications. A technical specification of the OLT may be downloaded from the server or obtained in another manner, for example, being loaded locally by using a data card. A technical specification of the ONU may be downloaded from the server by means of communication with the OLT by using the out-of-band management channel (when the data units of the PON system are not completely configured), downloaded by using the in-band data channel (when the data units of the PON system are configured), or obtained in another manner, for example, being loaded locally by using a data card. The storage unit may be physically a random access memory (RAM), a read-only memory (ROM), an erasable programmable read only memory (EPROM or a flash memory), an optical fiber, a portable read-only memory (CD-ROM), a high-speed RAM memory, a non-volatile memory (non-volatile memory), for example, a flash memory flash, or at least one magnetic disk storage.

This embodiment of the present invention discloses an apparatus for reconfiguration. The apparatus may be physically a high-performance DSP (Digital Signal Processor, signal processor), a high-performance FPGA (Filed-Programmable Gate Array, field programmable gate array), a high-performance CPU with multiple cores, such as dual cores, four cores, and eight cores, or may be an application-specific integrated circuit (Application Specific Integrated Circuit, ASIC), a system on chip (System on Chip, SoC), a central processing unit (Central Processor Unit, CPU), a network processor (Network Processor, NP), a microcontroller (Micro Controller Unit, MCU), a programmable controller (Programmable Logic Device, PLD), or another integrated chip. The apparatus is applied to an OLT side.

The apparatus includes a storage unit, a control unit, and a data unit.

The control unit is configured to: download, from a server according to a user instruction, a technical specification indicated by the user instruction, and load the technical specification to a storage unit of an optical network unit ONU by using an out-of-band management channel;
configure the technical specification to the data unit; and
deliver a control message to the ONU by using the out-of-band management channel, where the control message is used to instruct the ONU to configure a technical specification the same as the technical specification to a data unit of the ONU.

The data unit is configured to communicate, based on a mode supported by the technical specification, with the ONU by using an in-band data channel.

Optionally, the user instruction may be entered by using a command line or a network management system.

Specifically, the control unit receives the user instruction, parses the user instruction, downloads, from an external server to the storage unit according to an instruction of the user instruction, the technical specification indicated by the user instruction, converts the technical specification to an optical signal by using a DAC and an optical module, and transmits the optical signal to the ONU by using a spectral range corresponding to the out-of-band management channel.

Specifically, the control unit includes a PON component management module 52 and a configuration module 54. The PON component management module is configured to: determine, according to the user instruction, whether the storage unit 53 has the corresponding technical specification; and if the storage unit 53 has the corresponding technical specification, instruct an ONU registration module 51 to query, by using the out-of-band management channel, whether the ONU also supports the corresponding technical specification; or if the storage unit 53 has no corresponding technical specification, feed back prompt information indicating no support.

In a specific implementation manner, the PON component management module 52 is further configured to: when receiving a message fed back by the ONU that the ONU supports the technical specification, select the corresponding technical specification from the storage unit 53 and send the technical specification to the configuration module 54.

The configuration module 54 is configured to interact with programming interfaces of the data unit and deliver components at each layer supporting the technical specification to service modules of the data unit.

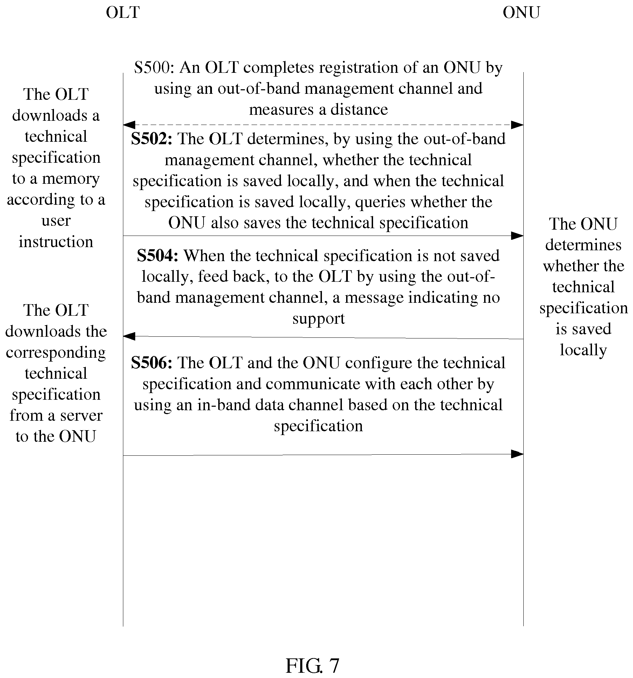

The following describes in detail, with reference to a specific application scenario and FIG. 7, how to perform PHY layer reconfiguration and MAC layer reconfiguration in this embodiment of the present invention. Application scenario 1: The OLT and the ONU are recently delivered from a factory, a modulation format of the in-band data channel is not determined, and alternatively, a default modulation format such as QPSK (Quadrature Phase Shift Keying, quadrature phase-shift keying) modulation or OOK (On-Off Keying, on-off keying) modulation may be set. A process specifically includes the following steps.

S500. The ONU registration module 51 of the control unit of the OLT obtains, by using the out-of-band management channel, an SN of an ONU (a serial number of the ONU) that recently goes online, completes registration of the ONU in the OLT, and measures a distance to obtain a distance between the OLT and the ONU.

Specifically, the ONU registration module 51 delivers an ONU registration request message by using the out-of-band management channel.

After receiving the registration request message by using the out-of-band management channel, an ONU that recently goes online reports a serial number SN by using the out-of-band management channel.

The ONU registration module 51 receives the SN reported by the ONU that recently goes online, verifies whether the SN is valid, and if the SN is valid, completes registration of the ONU and measures the distance.

The SN is valid when the SN is the same as an SN configured on the OLT side; otherwise, the SN is invalid. Only a valid ONU can register successfully. The OLT forces an invalid ONU offline.

It should be noted that a modulation format of the out-of-band management channel remains unchanged. For example, QPSK modulation or OOK modulation may be used. Alternatively, another modulation scheme disclosed in the prior art may be used.

Optionally, the OLT and the ONU measure signal-to-noise ratios (Signal-to -Noise Ratio, SNR) on upstream and downstream in-band data channels.

The SNR on the downstream data channel may be measured by using the following method: The OLT sends a signal in a fixed modulation format to the ONU by using the in-band data channel; for example, a QPSK modulation scheme is used (certainly, another modulation scheme known in the prior art may alternatively be used). The ONU compares an ideal QPSK constellation diagram and a QPSK constellation diagram restored from the received signal, to evaluate the SNR on the entire downstream in-band data channel. A result may be fed back to the OLT by using the out-of-band management channel or the in-band data channel.

The SNR on the upstream data channel may be measured by using the following method: The ONU sends a signal in a fixed modulation format to the OLT by using the data channel; for example, the QPSK modulation scheme is used (certainly, another modulation scheme known in the prior art may alternatively be used). The OLT compares an ideal QPSK constellation diagram and a QPSK constellation diagram restored from receiving, to evaluate the SNR on the upstream in-band data channel. A result may be fed back to the ONU by using the out-of-band management channel or the in-band data channel.

After a registration and going online process of the ONU is completed, the OLT may control the ONU and communicate with the ONU by using the out-of-band management channel.

S502. The PON component management module 52 of the OLT determines, according to the user instruction (for example, selecting one or multiple technical specifications), whether the storage unit 53 has a corresponding technical specification (alternatively, a technical specification currently existing in the data unit of the OLT may be obtained by using the configuration module 54); and if the storage unit 53 has the corresponding technical specification, instructs the ONU registration module 51 to query, by using the out-of-band management channel, whether the ONU also stores a corresponding technical specification; or if the storage unit 53 has no corresponding technical specification, downloads a technical specification indicated by the user instruction from an external server, and queries, by using the out-of-band management channel, whether the ONU stores a corresponding technical specification.

S504. After receiving the foregoing message used to query whether the ONU also supports the corresponding technical specification, an ONU registration module 61 of the ONU sends the message to a PON component management module 62. The PON component management module 62 determines whether a storage unit 63 has the corresponding technical specification (alternatively, a technical specification currently existing in a data unit of the ONU may be obtained by using a configuration module 64). If the storage unit 63 has the corresponding technical specification, the ONU registration module 61 feeds back an acknowledge message, indicating support, to the OLT by using the out-of-band management channel; or if the storage unit 63 has no corresponding technical specification, the ONU registration module 61 feeds back, to the OLT, a prompt indicating no support.

S506. After receiving the message from the ONU, the OLT performs corresponding processing. If the ONU does not support the technical specification, the OLT needs to download, for the ONU, the corresponding technical specification from the server; or if the ONU supports the technical specification, the PON component management module 52 of the OLT selects the corresponding technical specification from the storage unit 53 and then sends the corresponding technical specification to the configuration module 54. The configuration module 54 interacts with the programming interfaces of the data unit and delivers the components at each layer supporting the technical specification to the service modules (a PHY processing module and a MAC processing module). It should be noted that when the user instruction is an instruction indicating PHY layer reconfiguration, the technical specification may be code related to the PHY layer indicated by the user instruction. In this case, in step S506, the configuration module 54 delivers the components at each layer supporting the technical specification to the PHY processing module. Similarly, it can be learned that when the user instruction is an instruction indicating MAC layer reconfiguration, the configuration module 54 delivers the components at each layer supporting the technical specification to the MAC processing module. The OLT delivers the control message to the ONU by using the out-of-band management channel, so that the ONU performs corresponding configuration. After receiving the message, the PON component management module of the ONU selects the corresponding technical specification from the storage unit 63, and then sends the corresponding technical specification to the configuration module 64. The configuration module 64 interacts with programming interfaces in the data unit, delivers components at each layer supporting the technical specification to service modules (a PHY processing module and a MAC processing module), and then reports an acknowledge message to the OLT by using the out-of-band management channel.

In a normal working state, the OLT periodically scans, by using the out-of-band management channel, whether there is a newly powered on ONU, performs unified control on registration and online going, and negotiates and configures a reconfiguration parameter of the data unit.

Application scenario 2: In a normal working state, PHY layers and MAC layers of the OLT and the ONU are dynamically reconfigured according to a user's requirements. For example, an original single-carrier system may be reconfigured to be a multi-carrier system. A process of the reconfiguration may only include step S502 to step S506 in the first application scenario.

It should be noted that in an implementation manner, the foregoing technical specification may be directly saved in local memories of the OLT and the ONU. The OLT and the ONU separately configure the technical specification and run the technical specification, so that the OLT and ONU communicate with each other based on the mode supported by the technical specification. In this manner, a process of interaction between the OLT and the ONU is the same as step S502 to step S506. In S506, a difference lies in that if the OLT receives an instruction, indicating no support, sent from the ONU, the OLT directly sends, to the ONU, the technical specification locally saved in the storage unit.

According to the foregoing solutions, PHY layers and MAC layers may be dynamically reconfigured. A general PON system may be defined, by using different software, as PON systems of different standards according to a user's requirements and an application scenario, with no need to replace hardware. This greatly increases flexibility during PON deployment and reduces costs of deployment and maintenance.

### Embodiment 4

This embodiment of the present invention further discloses a passive optical network PON system. As shown in FIG. 6, the PON system includes an OLT and an ONU. The OLT is connected to at least one ONU by using an ODN. The OLT is configured to: download, from a server according to a user instruction, a technical specification indicated by the user instruction, and load the technical specification to the optical network unit ONU by using an out-of-band management channel; configure the technical specification; deliver a control message to the ONU by using the out-of-band management channel, to instruct the ONU to configure the technical specification; and communicate, based on a mode supported by the technical specification, with the ONU by using an in-band data channel. A downstream channel is divided into the out-of-band management channel and the in-band data channel according to spectra.

The ONU is configured to: receive, by using the out-of-band management channel, the control message delivered by the OLT; configure the technical specification, and communicate, based on the mode supported by the technical specification, with the OLT by using the in-band data channel.

Optionally, the OLT is further configured to: send a modulated signal to the ONU by using the in-band data channel and receive, by using the out-of-band management channel, a signal-to-noise ratio reported by the ONU.

Optionally, the OLT is further configured to: query, by using the out-of-band management channel, whether the ONU supports the technical specification, and if the ONU does not support the technical specification, load the technical specification to the ONU by using the out-of-band management channel.

Optionally, the OLT is further configured to receive a registration request of the ONU by using the out-of-band management channel.

A bandwidth of the out-of-band management channel is less than a bandwidth of the in-band data channel. Ranges of spectra of the out-of-band management channel and the in-band data channel may be randomly set according to an operator's requirement.

For a specific process of interaction between the OLT and the ONU, refer to descriptions in Embodiment 3. Details are not further described herein.

According to the foregoing technical solution, a physical layer or a MAC layer of a PON system may be dynamically reconfigured, and PON systems of different standards are defined according to a user's requirements and an application scenario, with no need to replace hardware. This greatly increases flexibility during PON deployment and reduces costs of deployment and maintenance.

### Embodiment 5

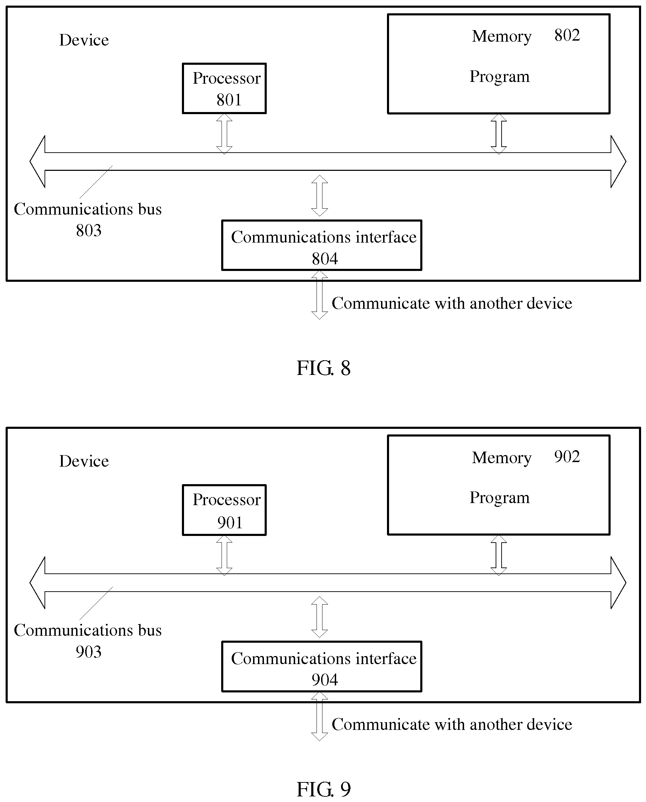

This embodiment of the present invention discloses an optical line terminal OLT. As shown in FIG. 8, the OLT includes a processor 801, a memory 802, a communications bus 803, and a communications interface 804. The processor 801, the memory 802, and the communications interface 804 are connected and communicate with each other by using the communications bus 803.

The processor 801 may be a single-core or multi-core central processing unit or an application-specific integrated circuit, or may be configured as one or more integrated circuits implementing the embodiments of the present invention.

The memory 802 may be a high-speed RAM memory, a non-volatile memory (non-volatile memory), for example, a flash memory flash, or at least one magnetic disk storage.

The memory 802 is configured to store a computer execution instruction 805. Specifically, the computer execution instruction 805 may include program code.

When a computer runs, the processor 801 runs the computer execution instruction 805 and may execute the method process executed by the OLT in Embodiment 3.

### Embodiment 6

This embodiment of the present invention discloses an optical network unit ONU. As shown in FIG. 9, the ONU includes a processor 901, a memory 902, a communications bus 903, and a communications interface 904. The CPU 901, the memory 902, and the communications interface 904 are connected and communicate with each other by using the communications bus 903.

The processor 901 may be a single-core or multi-core central processing unit or an application-specific integrated circuit, or may be configured as one or more integrated circuits implementing the embodiments of the present invention.

The memory 902 may be a high-speed RAM memory, a non-volatile memory (non-volatile memory), for example, a flash memory flash, or at least one magnetic disk storage.

The memory 902 is configured to store a computer execution instruction 905. Specifically, the computer execution instruction 905 may include program code.

When a computer runs, the processor 901 runs the computer execution instruction 905 and may execute the method process executed by the ONU in Embodiment 3.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following is taken as an example but is not limited: The computer readable medium may include a RAM (Random Access Memory, random access memory), a ROM (Read-Only Memory, read-only memory), an EEPROM (Electrically Erasable Programmable Read-Only Memory, electrically erasable programmable read-only memory), a CD-ROM (Compact Disc Read-Only Memory, compact disc read-only memory) or other optical disk storage, a disk storage medium or other disk storage, or any other medium that can be used to carry or store expected program code in a command or data structure form and can be accessed by a computer. In addition, any connection may be appropriately defined as a computer-readable medium. For example, if software is transmitted from a website, a server or another remote source by using a coaxial cable, an optical fiber/cable, a twisted pair, a DSL (Digital Subscriber Line, digital subscriber line) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk and a disc used by the present invention include a CD (Compact Disc, compact disc), a laser disc, an optical disc, a DVD disc (Digital Versatile Disc, digital versatile disc), a floppy disk and a Blu-ray disc. The disk generally copies data by a magnetic means, and the disc copies data optically by a laser means. The foregoing combination should also be included in the protection scope of the computer-readable medium.

The foregoing descriptions are only specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A communication method, comprising:
downloading, from a server according to a user instruction, a technical specification indicated by the user instruction, and sending the technical specification to an optical network unit ONU by using an out-of-band management channel;
configuring the technical specification;
delivering a control message to the ONU by using the out-of-band management channel, to instruct the ONU to configure the technical specification; and
communicating, based on a mode supported by the technical specification, with the ONU by using an in-band data channel.

2. The method according to claim 1, wherein the method further comprises:
sending a modulated signal to the ONU by using the in-band data channel; and
receiving, by using the out-of-band management channel, a signal-to-noise ratio SNR reported by the ONU.

3. The method according to claim 1 or 2, wherein the method further comprises:
querying, by using the out-of-band management channel, whether the ONU supports the technical specification, and when receiving a prompt that the ONU does not support the technical specification, sending the technical specification to the ONU by using the out-of-band management channel.

4. The method according to claim 1 or 2, wherein the method further comprises: querying, by using the out-of-band management channel, whether the ONU supports the technical specification, and receiving a message, indicating support, fed back by the ONU.

5. The method according to any one of claims 1 to 4, wherein the method further comprises:
receiving a registration request of the ONU by using the out-of-band management channel; and
sending, to the ONU by using the out-of-band management channel, an ONU identifier allocated to the ONU.

6. The method according to any one of claims 1 to 5, wherein a bandwidth of the out-of-band management channel is less than a bandwidth of the in-band data channel.

7. The method according to any one of claims 1 to 6, wherein spectra of the out-of-band management channel and the in-band data channel are independent of each other, and ranges of the spectra are set according to an operator's requirement.

8. A communication method, comprising:
receiving, by an optical network unit ONU by using an out-of-band management channel, a control message sent by an optical line terminal OLT, wherein the control message is used to instruct the ONU to configure a technical specification the technical specification corresponding to that of the OLT;
configuring the technical specification; and
communicating, by the ONU and based on the configured technical specification, with the OLT by using an in-band data channel.

9. The method according to claim 8, wherein the method further comprises:
receiving, by the ONU, a query message by using the out-of-band management channel, wherein the query message is used to query whether the ONU supports the technical specification the same as that of the OLT;
feeding back, to the OLT when the ONU does not support the technical specification, a prompt indicating no support; and
receiving and saving the technical specification sent by the OLT.

10. The method according to claim 8 or 9, wherein the method further comprises:
receiving, by the ONU, a modulated signal by using the in-band data channel, evaluating a signal-to-noise ratio on the in-band data channel according to a constellation diagram restored from the received signal, and feeding back the signal-to-noise ratio to the OLT by using the out-of-band management channel.

11. The method according to any one of claims 8 to 10, wherein the method further comprises:
sending a registration request of the ONU by using the out-of-band management channel; and
receiving, by using the out-of-band management channel, an ONU identifier allocated by the OLT to the ONU.

12. The method according to any one of claims 8 to 11, wherein a bandwidth of the out-of-band management channel is less than a bandwidth of the in-band data channel.

13. The method according to any one of claims 8 to 12, wherein spectra of the out-of-band management channel and the in-band data channel are independent of each other, and ranges of the spectra are randomly set according to an operator's requirement.

14. An apparatus for reconfiguration, comprising:
a control unit, configured to: download, from a server according to a user instruction, a technical specification indicated by the user instruction, and load the technical specification to an optical network unit ONU by using an out-of-band management channel; configure the technical specification to a data unit; and deliver a control message to the ONU by using the out-of-band management channel, to instruct the ONU to configure the technical specification; and
the data unit, configured to: configure the technical specification and communicate, based on a mode supported by the technical specification, with the ONU by using an in-band data channel.

15. The apparatus according to claim 14, wherein the apparatus further comprises a storage unit, configured to store the technical specification.

16. The apparatus according to claim 14 or 15, wherein the control unit is further configured to: send a modulated signal to the ONU by using the in-band data channel and receive, by using the out-of-band management channel, a signal-to-noise ratio SNR reported by the ONU.

17. The apparatus according to any one of claims 14 to 16, wherein the control unit is further configured to: query, by using the out-of-band management channel, whether the ONU supports the technical specification, and if a prompt that the ONU does not support the technical specification is received, send the technical specification to the ONU by using the out-of-band management channel.

18. The apparatus according to any one of claims 14 to 17, wherein a bandwidth of the out-of-band management channel is less than a bandwidth of the in-band data channel.

19. The apparatus according to any one of claims 14 to 18, wherein spectra of the out-of-band management channel and the in-band data channel are independent of each other, and ranges of the spectra are set according to an operator's requirement.

20. The apparatus according to any one of claims 14 to 19, wherein the control unit is further configured to complete registration of the ONU by using the out-of-band management channel.

21. An apparatus for reconfiguration, comprising:
a control unit, configured to: receive, by using an out-of-band management channel, a control message sent by an optical line terminal OLT and configure, to a data unit according to an instruction of the control message, a technical specification the same as that of the OLT; and
the data unit, configured to: configure the technical specification and communicate, based on a mode supported by the technical specification, with the OLT by using an in-band data channel.

22. The apparatus according to claim 21, wherein the apparatus further comprises a storage unit, configured to store the technical specification.

23. The apparatus according to claim 21 or 22, wherein the control unit is further configured to receive a query message by using the out-of-band management channel, to query whether an optical network unit ONU supports the technical specification the same as that of the OLT; and if the ONU supports the technical specification, send an acknowledgement message to the OLT.

24. The apparatus according to any one of claims 21 to 23, wherein the control unit is further configured to receive a modulated signal by using the in-band data channel, evaluate a signal-to-noise ratio on the in-band data channel according to a constellation diagram restored from the received signal, and feed back the signal-to-noise ratio to the OLT by using the out-of-band management channel.

25. The apparatus according to any one of claims 21 to 24, wherein the control unit is further configured to: receive a query message by using the out-of-band management channel, wherein the query message is used to query whether an optical network unit ONU supports the technical specification the same as that of the OLT; if the ONU does not support the technical specification, feed back, to the OLT, a prompt indicating no support; receive the technical specification sent by the OLT; and store the technical specification to the storage unit or configure the technical specification to the data unit.

26. The apparatus according to any one of claims 21 to 25, wherein a bandwidth of the out-of-band management channel is less than a bandwidth of the in-band data channel.

27. The apparatus according to any one of claims 21 to 26, wherein spectra of the out-of-band management channel and the in-band data channel are independent of each other, and ranges of the spectra are set according to an operator's requirement.

28. A passive optical network PON system, comprising:
an optical line terminal OLT, configured to: download, from a server according to a user instruction, a technical specification indicated by the user instruction, and load the technical specification to an optical network unit ONU by using an out-of-band management channel; configure the technical specification; deliver a control message to the ONU by using the out-of-band management channel, wherein the control message is used to instruct the ONU to configure the technical specification; and communicate, based on a mode supported by the technical specification, with the ONU by using an in-band data channel, wherein a downstream channel is divided into the out-of-band management channel and the in-band data channel according to spectra; and
the ONU, configured to: receive, by using the out-of-band management channel, the control message delivered by the OLT; configure the technical specification; and communicate, based on the mode supported by the technical specification, with the OLT by using the in-band data channel.

29. The system according to claim 28, wherein the OLT is further configured to: send a modulated signal to the ONU by using the in-band data channel and receive, by using the out-of-band management channel, a signal-to-noise ratio reported by the ONU.

30. The system according to claim 28 or 29, wherein the OLT is further configured to: query, by using the out-of-band management channel, whether the ONU supports the technical specification, and when receiving a prompt, indicating no support, fed back by the ONU, send the technical specification to the ONU by using the out-of-band management channel.

31. The system according to any one of claims 28 to 30, wherein the OLT is further configured to receive a registration request of the ONU by using the out-of-band management channel.

32. The system according to any one of claims 28 to 31, wherein a bandwidth of the out-of-band management channel is less than a bandwidth of the in-band data channel.

33. The system according to any one of claims 28 to 32, wherein spectra of the out-of-band management channel and the in-band data channel are independent of each other, and ranges of the spectra are set according to an operator's requirement.

34. An optical line terminal OLT, comprising a processor, wherein the processor is configured to execute the method according to any one of claims 1 to 7.

35. An optical network unit ONU, comprising a processor, wherein the processor is configured to execute the method according to any one of claims 8 to 13.
